# EUROPÄISCHE PATENTSCHRIFT

(11) **EP 1 747 139 B1**
(45) Veröffentlichungstag und Bekanntmachung des Hinweises auf die Patenterteilung: **17.10.2007**
(21) Anmeldenummer: 05716926.0
(22) Anmeldetag: 04.03.2005
(51) Int. Cl.: B62D 15/02

(54) **VORRICHTUNG ZUR UNTERSTÜTZUNG EINES EINPARKVORGANGS EINES FAHRZEUGS**
DEVICE FOR ASSISTING WITH A PARKING PROCESS OF A VEHICLE
DISPOSITIF D'ASSISTANCE AU STATIONNEMENT D'UN VEHICULE

(30) Priorität: 15.04.2004 DE 102004018205
(43) Veröffentlichungstag der Anmeldung: 31.01.2007
(73) Patentinhaber: ROBERT BOSCH GMBH, 70442 Stuttgart (DE)
(72) Erfinder: UHLER, Werner, 76646 Bruchsal (DE)
(86) Internationale Anmeldenummer: PCT/EP2005/050990
(87) Internationale Veröffentlichungsnummer: WO 2005/100135

(56) Entgegenhaltungen:
- EP-A- 1 123 844
- DE-A1- 10 250 021

## Beschreibung

### Stand der Technik

Die Erfindung betrifft eine Vorrichtung zur Unterstützung eines Einparkvorgangs eines Fahrzeugs mit einer Rückfahrkamera zur Aufnahme eines den Raum hinter dem Fahrzeug wiedergebenden Rückfahrbildes und mit einem Bildschirm zur Anzeige des Rückfahrbildes, wobei auf dem Bildschirm in Überlagerung des Rückfahrbildes eine mit zumindest einem Teil einer Begrenzung einer Parklücke in Übereinstimmung zu bringende Entscheidungsmarke für einen ersten Lenkeinschlag des Einparkvorgangs darstellbar ist.

Eine solche Vorrichtung ist offenbart, gemäß Oberbegriff des Anspruchs 1 beispielsweise in EP 1 123 844 A1. Bei dieser Vorrichtung wird die rückwärtige Situation des Fahrzeugs mittels der Kamera aufgenommen und einem Fahrer des Fahrzeugs auf dem Bildschirm zur Anzeige gebracht. Der Anzeige werden Hilfslinien - zum Beispiel der aktuelle Fahrschlauch, der den aus dem Momentanzustand fortgeschriebenen Fahrweg des Fahrzeugs angibt - überlagert, die dem Fahrer helfen sollen, in die Parklücke hineinzumanövrieren. Die Vorrichtung ist dafür vorgesehen, in eine senkrecht zur Fahrzeugrichtung oder in eine parallel zur Fahrzeugrichtung angeordnete Parklücke mit höchstens zwei Zügen ohne Fahrtrichtungsänderung zu gelangen, die Fahrtrichtung ist grundsätzlich rückwärts gerichtet. Nachteilig gestattet diese Vorrichtung ein Einparken in seitliche, parallel zur Fahrzeugrichtung angeordnete Parklücken mit Unterstützung der Hilfslinien nur als zweizügiges Einparken. Dabei wird mit Hilfe des ersten Zuges in die Parklücke hineingelenkt, im zweiten Zug wird gegengelenkt, und noch während des zweiten Zuges wird die parallele Position des eigenen Fahrzeugs in der Parklücke erreicht Ein zweizügiges Einparken erfordert prinzipbedingt eine größere Parklücke als ein drei- oder mehrzügiges Einparken.

Ferner offenbart JP 2001334898 A eine Parkhilfeeinrichtung für ein Fahrzeug, die eine Kamera am Fahrzeugheck zur Aufnahme einer Rückansicht und einen in der Nähe eines Lenkrades angeordneten Bildschirm zur Anzeige der Rückansicht aufweist. Auf dem Bildschirm wird eine Startposition für einen Lenkvorgang angezeigt, um das Fahrzeug in einem sich in etwa senkrecht zur Fahrzeugausrichtung erstreckenden Parkbereich abstellen zu können.

Darüber hinaus sind mit Hilfe von Ultraschallsensoren arbeitende Einparkhilfesysteme bekannt, die den Fahrer des Fahrzeugs akustisch und/oder optisch, zum Beispiel mittels einer Balkenanzeige, vor Hindernissen in der Nähe des eigenen Fahrzeugs warnen.

### Vorteile der Erfindung

Der Erfindung liegt die Aufgabe zugrunde, eine Vorrichtung der eingangs genannten Art vorzuschlagen, die den Fahrer des Fahrzeugs auch dabei unterstützt, in enge Parklücken und mit mehr als zwei Zügen einzuparken.

Diese Aufgabe wird erfindungsgemäß dadurch gelöst, dass auf dem Bildschirm gleichzeitig mehrere Entscheidungsmarken für den ersten Lenkeinschlag darstellbar sind, die jeweils mit einer unterschiedlichen Anzahl von für den Einparkvorgang mindestens auszuführenden Zügen korrespondieren.

Die erfindungsgemäße Vorrichtung, die sich besonders zum einfachen Einparken in seitliche Parklücken parallel zum einzuparkenden Fahrzeug eignet, bietet eine Unterstützung auch beim Einparken in enge Parklücken, die mit einem nur zweizügigen Parkvorgang nicht erreicht werden können. Im Gegensatz zum zweizügigen Parken wird beim dreizügigen Parken die Fahrtrichtung des Fahrzeugs nach dem zweiten Zug gewechselt, ein weiterer Fahrtrichtungswechsel erfolgt beim vierzügigen Parken nach dem dritten Zug. Die Vorrichtung ist sehr betriebssicher und wartungsarm, da sie - im Gegensatz zu den aus dem Stand der Technik bekannten Einrichtungen mit optischen und/oder akustischen Sensoren - nicht als messendes System arbeitet. Ein aufwendiges und fehleranfälliges Vermessen der Parklücke ist mit der Erfindung nicht erforderlich. Insbesondere trägt die erfindungsgemäße Vorrichtung dem Umstand Rechnung, dass Fahrer beim ersten Zug des Einparkvorgangs mit einem rückwärts fahrenden Fahrzeug regelmäßig nicht den vollen Lenkeinschlag nutzen, vor allem um ein Überragen der Fahrzeugfront in den Gegenverkehr und somit eine mögliche Kollision zu vermeiden. Viele der aus dem Stand der Technik bekannten Zwei-Zug-Einparkhilfen erfordern demgegenüber zwingend einen Volleinschlag der Lenkung bereits beim ersten Zug, andernfalls ist ein erfolgreicher Abschluss des Einparkvorgangs nicht mehr zu erreichen. Hingegen unterstützt die erfindungsgemäße Vorrichtung den Fahrer auch dann und ermöglicht ihm ein Einparken des Fahrzeugs, wenn der erste Lenkeinschlag nicht voll erfolgt. Dabei nutzt die Erfindung die Tatsache, dass für ein gegebenes Fahrzeug der Zusammenhang zwischen Lenkwinkel und Fahrzeugtrajektorien jeweils festgelegt ist. Daraus ergeben sich jeweils Entscheidungspunkte für die Änderung des Lenkeinschlags in Abhängigkeit von der relativen Lage der Parklücke zum Fahrzeug. Zur Visualisierung der Entscheidungspunkte sieht die Erfindung graphische Elemente in Form von Entscheidungsmarken vor, die der Fahrer mittels der Rückfahrkamera auf dem Bildschirm in einfacher Weise mit gut sichtbaren Objekten, beispielsweise einer Begrenzung der Parklücke, zur Deckung bringen kann. Die Entscheidungsmarken können dauerhaftan vorgegebenen Stellen des Bildschirms oder fallweise (zum Beispiel wenn die Vorrichtung einen Einparkvorgang erkennt oder durch Anwahl des Fahrers) an diesen vorbestimmten Stellen dargestellt sein.

Die Vorrichtung bietet eine besonders gute Übersichtlichkeit und ist für den Fahrer sehr einfach zu bedienen, wenn gemäß einer vorteilhaften Weiterbildung der Erfindung die Entscheidungsmarken mit der dem Fahrzeug abgewandten hinteren Begrenzung der Parklücke bei einem seitlichen Einparkvorgang in Übereinstimmung bringbare horizontale Linien sind. Die hintere Begrenzung der Parklücke ist beispielsweise ein hinter dem die Parklücke bildenden freien Parkplatz bereits abgestelltes weiteres Fahrzeug.

Gemäß einer anderen vorteilhaften Weiterbildung der Erfindung sind auf dem Bildschirm in Überlagerung des Rückfahrbildes einen Fahrschlauch des Fahrzeugs in Abhängigkeit vom Lenkeinschlag angebende Fahrschlauchbegrenzungen darstellbar. Auf diese Weise erhält der Fahrer eine übersichtliche, leicht abzulesende Information über den zu erwartenden Weg des Fahrzeugs in dem momentanen rückwärtigen Fahrzeugumfeld. Im einfachsten Fall sind die Fahrschlauchbegrenzungen zwei gerade (bei nicht eingeschlagener Lenkung) oder gebogene (bei eingeschlagener Lenkung) Linien.

Hilfreich für eine Information des Fahrers über die mögliche weitere Bewegung des Fahrzeugs in dem momentanen rückwärtigen Fahrzeugumfeld ist es zudem, wenn gemäß einer anderen vorteilhaften Weiterbildung der Erfindung auf dem Bildschirm in Überlagerung des Rückfahrbildes zumindest ein Abschnitt eines den minimalen Fahrkreis des Fahrzeugs angebenden Bogens darstellbar ist. Auf diesem Fahrkreis oder (bei Darstellung sowohl für nach links wie nach rechts eingeschlagener Lenkung) diesen Fahrkreisen bewegt sich das jeweils äußere Hinterrad des Fahrzeugs bei voll eingeschlagener Lenkung.

Wesentlich für einen erfolgreichen Einparkvorgang ist vor allem der Beginn und die Durchführung des ersten Lenkvorgangs mit Bezug auf die mit dem eigenen Fahrzeug zu belegende Parklücke. Eine vorteilhafte Unterstützung für den weiteren Verlauf des Einparkvorgangs bietet die erfindungsgemäße Vorrichtung, wenn nach einer anderen Weiterbildung auf dem Bildschirm in Überlagerung des Rückfahrbildes eine mit zumindest einem Teil einer Begrenzung der Parklücke in Übereinstimmung zu bringende Zweitentscheidungsmarke für einen zweiten Lenkeinschlag darstellbar ist.

Die Präzision des Einparkvorgangs kann dabei vorteilhaft weiter erhöht werden, wenn gemäß einer Weiterbildung der Erfindung auf dem Bildschirm mehrere Zweitentscheidungsmarken für den zweiten Lenkeinschlag darstellbar sind, die jeweils mit einer unterschiedlichen Anzahl von für den Einparkvorgang mindestens auszuführenden Zügen korrespondieren. Vorzugsweise stimmt die Anzahl der Entscheidungsmarken und der Zweitentscheidungsmarken überein, beispielsweise sind drei Entscheidungsmarken und drei Zweitentscheidungsmarken, jeweils zur Unterstützung eines zwei-, drei- und vierzügigen Einparkens, vorhanden.

Grundsätzlich können die Zweitentscheidungsmarken - wie auch die oben beschriebenen Entscheidungsmarken - beliebige graphische Elemente, zum Beispiel Kreise, Punkte oder Dreiecke, sein. Für eine einfache, den Fahrer möglichst wenig ablenkende Ablesbarkeit des Bildschirms ist es hingegen von besonderem Vorteil, wenn gemäß einer Weiterbildung der Erfindung mindestens eine der Zweitentscheidungsmarken ein mit einer inneren Begrenzung der Parklücke bei einem seitlichen Einparkvorgang in Übereinstimmung bringbares Kreissegment oder ein an das Kreissegment angenäherter Geradenabschnitt ist. Das (kurze) Kreissegment erhöht die Übersichtlichkeit der Anzeige, der angenäherte Geradenabschnitt, der das Kreissegment ersetzt, verringert vorteilhaft zusätzlich den rechnerischen Aufwand für die Anzeige. Die innere Parklückenbegrenzung entspricht in der Regel einer Bordsteinkante.

Gemäß einer anderen vorteilhaften Weiterbildung der Erfindung ist mindestens eine der Zweitentscheidungsmarken ein die Darstellung des minimalen Fahrkreises schneidendes Kreissegment oder ein an das Kreissegment angenäherter Geradenabschnitt, wobei ein (kurzes) Kreissegment bereits die Übersichtlichkeit erhöht und ein das Kreissegment ersetzender Geradenabschnitt den Anzeigeaufwand zusätzlich verringert. Insbesondere eine mit einer Zwei-Zug-Einparkstrategie, die einen vollen Lenkeinschlag auch beim Gegenlenken - das heißt beim zweiten Zug - erfordert, korrespondierende Zweitentscheidungsmarke kann in vorteilhaft weiter reduzierter Anzeige ein Schnitt- oder Zusammenstoßpunkt der Darstellungen der sich für einen rechten und einen linken Lenkeinschlag jeweils ergebenden minimalen Fahrkreise sein.

Die Übersichtlichkeit der Bildschirmdarstellung kann gemäß einer anderen vorteilhaften Weiterbildung der Erfindung auch dadurch erhöht werden, dass zumindest eine der Zweitentscheidungsmarken ein die Darstellung einer Fahrschlauchbegrenzung schneidendes Kreissegment oder - zur vorteilhaften zusätzlichen Verringerung des Anzeigesteaerungsaufwandes - ein an das Kreissegment angenäherter Geradenabschnitt ist; der angenäherte Geradenabschnitt ersetzt das Kreissegment vorzugsweise. Dabei kann auf die Darstellung eines minimalen Fahrkreises vorteilhaft nahezu vollständig verzichtet werden, wenn die Darstellungen der minimalen Fahrkreise für rechten und linken Lenkeinschlag jeweils auf ein eine linke und ein eine rechte Fahrschlauchbegrenzung schneidendes Liniensegment reduziert werden.

Gemäß einer anderen vorteilhaften Weiterbildung der Erfindung wird die Klarheit der Bildschirmdarstellung weiter erhöht und die Bedienbarkeit der Vorrichtung vereinfacht, wenn die Entscheidungsmarken und/oder die Zweitentscheidungsmarken mit Ziffern entsprechend der jeweiligen Anzahl der für den Einparkvorgang insgesamt (also einschließlich des ersten Zuges) mindestens auszuführenden Züge versehen sind.

Gemäß einer anderen vorteilhaften Weiterbildung der Erfindung ist die Bildschirmdarstellung für den Fahrer besonders leicht erfassbar, wenn der Bildschirm ein Farbbildschirm ist und die Entscheidungsmarken und/oder die Zweitentscheidungsmarken und/oder die Fahrschlauchbegrenzungen und/oder der zumindest eine Abschnitt zur Angabe des minimalen Fahrkreises in jeweils unterschiedlichen Farben darstellbar sind.

Vorteilhaft zusätzlich erhöht wird der Informationsgehalt der Anzeige gemäß einer anderen Weiterbildung der Erfindung dadurch, dass die Entscheidungsmarken und/oder die Zweitentscheidungsmarken in Abhängigkeit von dem Lenkeinschlag darstellbar sind. Damit kann ein dynamisches Verschieben der Entscheidungsmarken und/oder der Zweitentscheidungsmarken entsprechend dem vom Fahrer des Fahrzeugs tatsächlich gewählten Lenkwinkel erfolgen.

Gemäß einer anderen vorteilhaften Weiterbildung der Erfindung ist zumindest eine der Entscheidungsmarken und/oder zumindest eine der Zweitentscheidungsmarken ausblendbar. Auf diese Weise wird die Übersichtlichkeit der Anzeige dadurch weiter erhöht, dass beispielsweise die in einer bestimmten Phase des Einparkvorgangs nicht erforderlichen Entscheidungsmarken und/oder Zweitentscheidungsmarken automatisch, das heißt durch die Vorrichtung zur Unterstützung des Einparkvorgangs selbst, oder vom Fahrer gewählt nicht mehr angezeigt werden.

### Zeichnung

Ausführungsbeispiele der Erfindung sind in der Zeichnung schematisiert dargestellt und werden nachfolgend näher beschrieben. Es zeigen
Figur 1 ein Fahrzeug und eine Parklücke in Draufsicht und
Figuren 2 bis 11 jeweils einen Bildschirm mit einem Rückfahrbild und Entscheidungsmarken.

### Beschreibung der Ausführungsbeispiele

In sämtlichen Figuren sind sich entsprechende Elemente mit gleichen Bezugszeichen versehen.

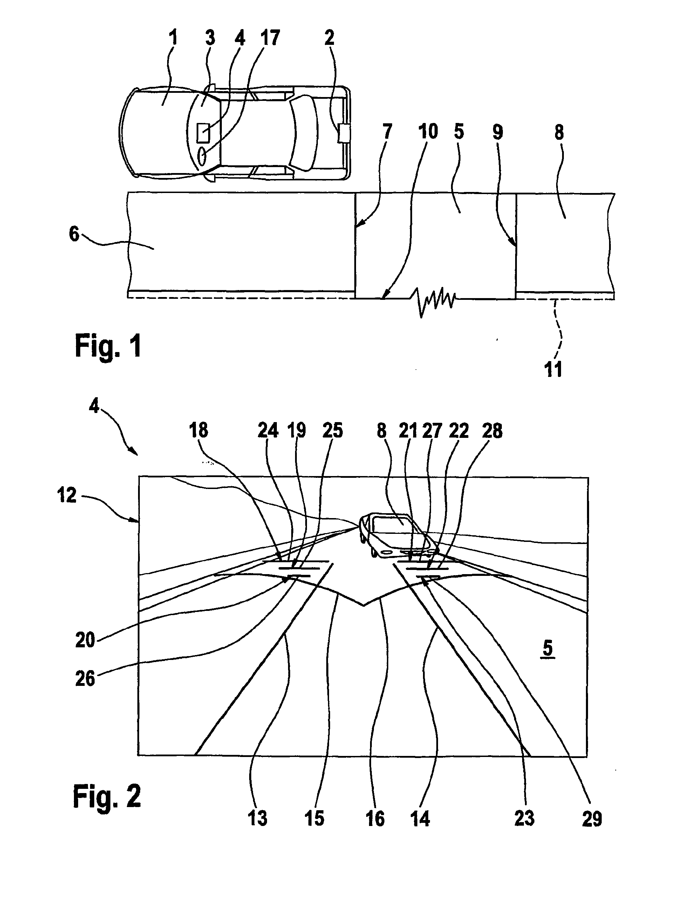

Figur 1 zeigt ein Fahrzeug 1, das eine Vorrichtung zur Unterstützung eines Einparkvorgangs des Fahrzeugs 1 besitzt. Die Vorrichtung, die eine Rückfahrkamera 2 und einen im Bereich einer Armaturentafel 3 angeordneten Bildschirm 4 aufweist, auf dem ein von der Rückfahrkamera 2 aufgenommenes Rückfahrbild anzeigbar ist, ermöglicht dem Fahrer des Fahrzeugs 1 ein zielsicheres, passgenaues Einparken in eine hier nur verkürzt dargestellte seitliche Parklücke 5. Das Heck eines abgestellten Fahrzeugs 6 bildet eine vordere Begrenzung 7 und die Front eines weiteren abgestellten Fahrzeugs 8 eine hintere Begrenzung 9 der Parklücke 5, deren seitliche, innere Begrenzung 10 eine Bordsteinkante 11 darstellt.

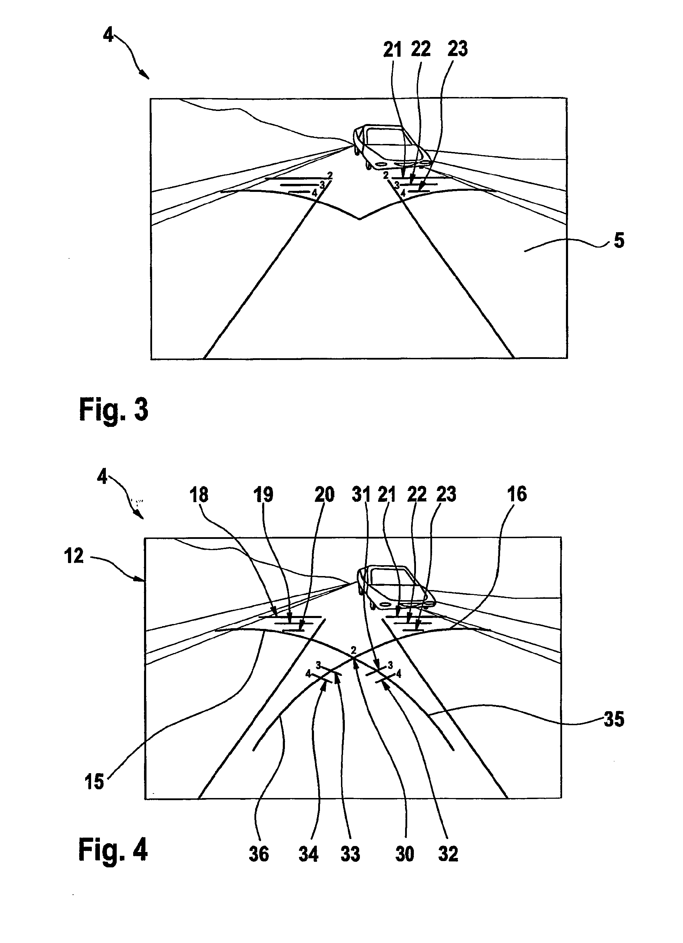

In Figuren 2, 3 ist ein Bildschirm 4 in einem ersten Ausführungsbeispiel dargestellt. Auf dem Bildschirm 4 ist ein den Raum hinter einem Fahrzeug 1 (siehe Figur 1) wiedergebendes Rückfahrbild 12 gezeigt, dem Fahrschlauchbegrenzungen 13, 14 überlagert sind, welche dem Fahrer einen Fahrschlauch des Fahrzeugs 1 in Abhängigkeit vom Lenkeinschlag visualisieren. Weiterhin sind dem Rückfahrbild 12 Abschnitte 15, 16 von Bögen überlagert, die den minimalen Fahrkreis des Fahrzeugs 1 jeweils bei vollem Einschlag eines Lenkrades 17 im Uhrzeigersinn und entgegen dem Uhrzeigersinn angeben. Als dritte Gruppe graphischer Elemente sind dem Rückfahrbild 12 als horizontale Linien 24 bis 29 ausgebildete Entscheidungsmarken 18 bis 23 überlagert, die jeweils mit einer unterschiedlichen Anzahl von für den Einparkvorgang mindestens auszuführenden Zügen korrespondieren. Die am weitesten vom einzuparkenden Fahrzeug 1 entfernt liegenden Entscheidungsmarken 18, 21 sind für zweizügiges, die dem Fahrzeug 1 nächstkommenden Entscheidungsmarken 20, 23 für vierzügiges und die dazwischen liegenden Entscheidungsmarken 19, 22 für dreizügiges Einparken maßgebend. Ein erster, in Richtung der Parklücke 5 auszuführender Lenkeinschlag hat für einen passgenauen Einparkvorgang zu erfolgen, wenn die entsprechende Entscheidungsmarke, zum Beispiel die Linie 27 für zweizügiges Einparken in die Parklücke 5, mit der durch ein abgestelltes Fahrzeug 8 festgelegten hinteren Begrenzung 9 der Parklücke 5 in Übereinstimmung gebracht ist.

Diese Situation ist in Figuren 2, 3 dargestellt, wobei in der Anzeige auf einem Bildschirm 4 nach Figur 3 die für den hier vorliegenden Fall, nämlich Rückwärtseinparken am linken Fahrbahnrand, maßgeblichen Entscheidungsmarken 21 bis 23 mit Ziffern 2, 3, 4 entsprechend der jeweiligen Anzahl der insgesamt mindestens auszuführenden Züge versehen sind. Aufgrund seines Erfahrungsschatzes und unter Berücksichtigung der geschätzten Länge der Parklücke 5 trifft der Fahrer vor Beginn des Einparkvorgangs eine Entscheidung hinsichtlich der zu verfolgenden Einparkstrategie, das heißt über die Anzahl der (voraussichtlich) benötigten Züge. Bei einer großen Parklücke 5 kann das bequemere zweizügige Einparken gewählt werden, bei kleineren Parklücken 5 hingegen ein Drei- oder Vier-Zug-Verfahren.

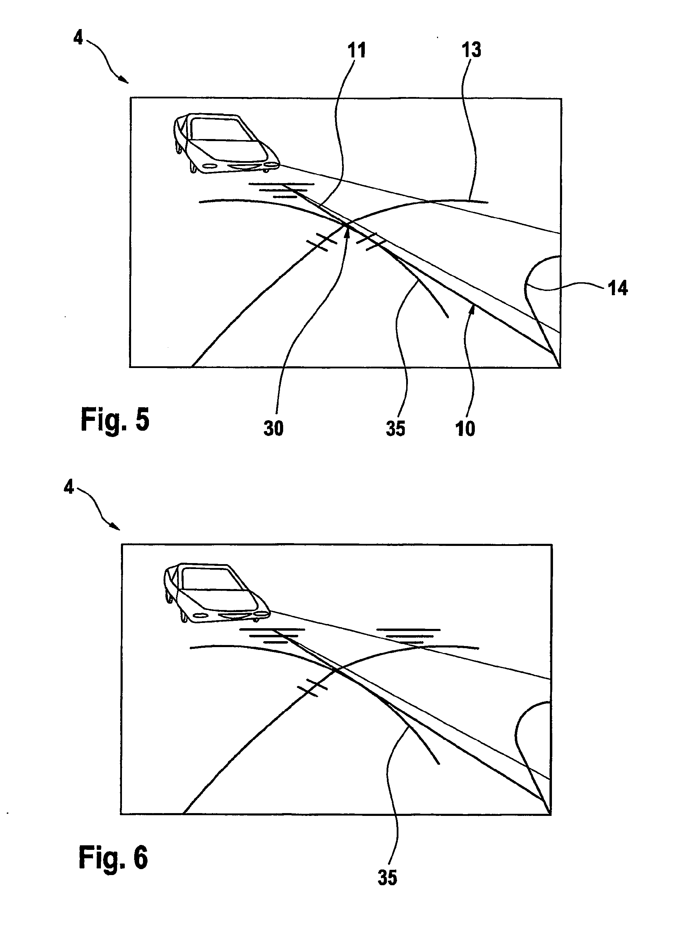

In einem zweiten Ausführungsbeispiel nach Figuren 4 bis 6 sind einem Rückfahrbild 12 auf einem Bildschirm 4 neben Entscheidungsmarken 18 bis 23 für einen ersten Lenkeinschlag (entsprechend dem Ausführungsbeispiel nach Figuren 2, 3) zusätzlich Zweitentscheidungsmarken 30 bis 34 für einen zweiten Lenkeinschlag überlagert. Die Zweitentscheidungsmarken 30 bis 34 sind mit Ziffern 2, 3, 4 entsprechend der jeweiligen Anzahl der insgesamt, das heißt einschließlich des ersten Zuges, mindestens auszuführenden Züge versehen. Die zusätzlichen Zweitentscheidungsmarken 31 bis 34 für drei- und vierzügiges Einparken werden an - die minimalen Fahrkreise des Fahrzeugs 1 (siehe Figur 1) symbolisierenden - Abschnitten 15, 16 von Bögen angezeigt. Diese Abschnitte 15, 16 sind dafür im Vergleich zu dem Ausführungsbeispiel nach Figuren 2, 3 auf das eigene Fahrzeug 1 hin mit Verlängerungen 35, 36 versehen; die Zweitentscheidungsmarke 30 für zweizügiges Einparken wird durch den Zusammentreffpunkt der vorgenannten Abschnitte 15,16 dargestellt. Die Situation in Ausgangsstellung, das heißt vor dem ersten Zug und korrespondierend mit der Darstellung in Figur 1, zeigt Figur 4. Die Anzeige auf dem Bildschirm 4 am Umlenkpunkt für ein zweizügiges Einparken ist in Figur 5 dargestellt : Der zweite Lenkeinschlag, der der Richtung des ersten Lenkeinschlags entgegengesetzt ist, erfolgt für ein passgenaues Einparken dann, wenn die entsprechende Zweitentscheidungsmarke 30 mit einer inneren Begrenzung 10, hier einer Bordsteinkante 11, der Parklücke 5 in Übereinstimmung kommt. Will der Fahrer drei-, vier- oder mehrzügig einparken, so setzt er mit unverändertem Lenkwinkel weiter zurück, bis die entsprechende Zweitentscheidungsmarke mit der Bordsteinkante 11 zur Deckung kommt; an diesem Punkt lenkt der Fahrer dann voll in entgegengesetzter Richtung ein. Daraufhin stößt er mit dem Fahrzeug 1 weiter zurück, bis das parklückeninnere Hinterrad seines Fahrzeugs 1 die Bordsteinkante 11 erreicht, um dann mit den entsprechenden weiteren Zügen das Fahrzeug 1 vorwärts (und gegebenenfalls nachfolgend rückwärts) in der Parklücke 5 gerade auszurichten.

Die longitudinale Position der Zweitentscheidungsmarken 31 bis 35 auf den die minimalen Fahrkreise angebenden Abschnitten 15, 16 beziehungsweise auf deren Verlängerungen 35, 36 kann - zum Beispiel mit Hilfe einer Steuerungseinrichtung der Vorrichtung zur Unterstützung des Einparkvorgangs sowie unter Berücksichtigung des Signals eines Lenkwinkelsensors - entsprechend dem aktuellen Lenkwinkel des Fahrzeugs 1 angepasst werden. Dann ist die Lage der Zweitentscheidungsmarken 31 bis 35 nicht statisch, sondern sie wird dynamisch den aktuellen, tatsächlichen fahrdynamischen Gegebenheiten angepasst. Damit wird berücksichtigt, dass das Fahrzeug 1 am jeweils maßgeblichen Umlenkpunkt unter umso kleineren Winkeln zur Parklücke 5 steht, je geringer der von dem Fahrer für den vorhergehenden, hier: den ersten, Zug gewählte Lenkwinkel war. Aus Figur 5 ist zudem ersichtlich, dass den Fahrschlauch des Fahrzeugs 1 symbolisierende Fahrschlauchbegrenzungen 13,14 in Abhängigkeit vom momentanen Lenkwinkel dargestellt werden und dementsprechend in der Situation nach Figur 5 bogenförmig in Richtung auf die Bordsteinkante 11 ausgebildet sind. Wie in Figur 6 in einer Abwandlung des Ausführungsbeispiels gezeigt, können in der Anzeige auf dem Bildschirm 4 nicht benötigte Zweitentscheidungsmarken, hier diejenigen auf der Verlängerung 35, ausgeblendet sein. Das Ausblenden erfolgt anhand einer Auswertung des von dem Lenkwinkelsensor erfassten momentanen Lenkwinkels mittels der Steuerungseinrichtung.

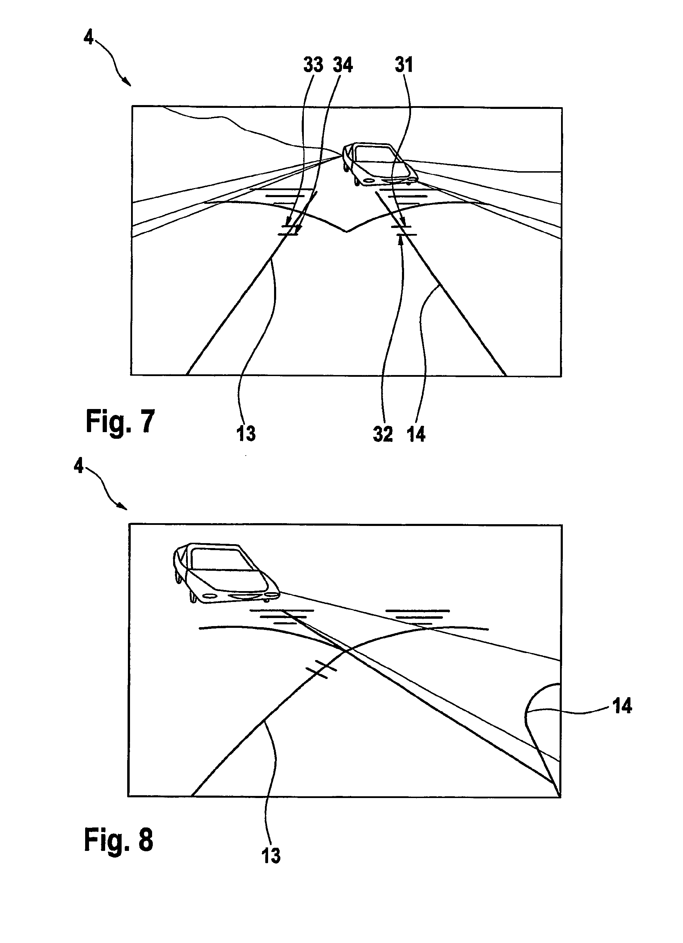

Ein drittes Ausführungsbeispiel zeigen die Figuren 7, 8, in denen auf einem Bildschirm 4 zusätzliche Zweitentscheidungsmarken 31 bis 34 für drei- und vierzügiges Einparken nicht an Darstellungen der minimalen Fahrkreise, sondern an Fahrschlauchbegrenzungen 13,14 des aktuellen Fahrschlauchs des Fahrzeugs 1 (siehe Figur 1) angezeigt sind. Bei Veränderung des Lenkwinkels bewegen sich die vorgenannten Zweitentscheidungsmarken 31 bis 34 entsprechend der Verlagerung der Fahrschlauchbegrenzungen 13, 14 mit diesen mit. Die Situation in Ausgangsstellung, das heißt vor dem ersten Zug, zeigt Figur 7, und Figur 8 gibt die Anzeige auf dem Bildschirm 4 am Umlenkpunkt für ein Zwei-Zug-Einparken wieder. Die longitudinale Position der Zweitentscheidungsmarken 31 bis 34 auf den Fahrschlauchbegrenzungen 13, 14 kann gemäß dem aktuellen Lenkwinkel entsprechend dem Ausführungsbeispiel nach Figuren 4 bis 6 angepasst werden. Auch ein Ausblenden von aktuell nicht erforderlichen Zweitentscheidungsmarken ist wie beim vorgenannten Ausführungsbeispiel möglich.

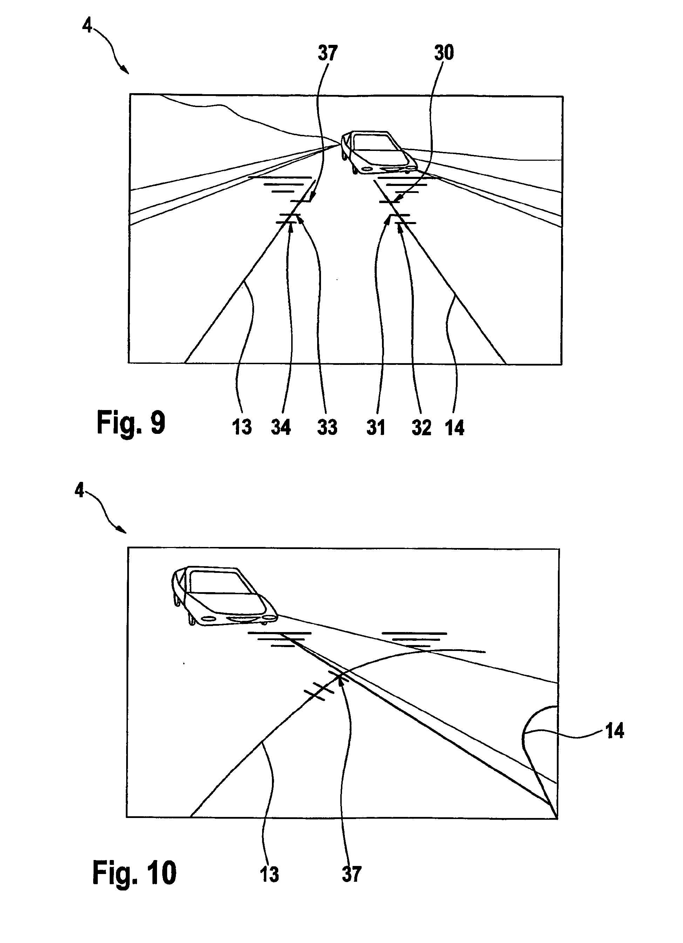

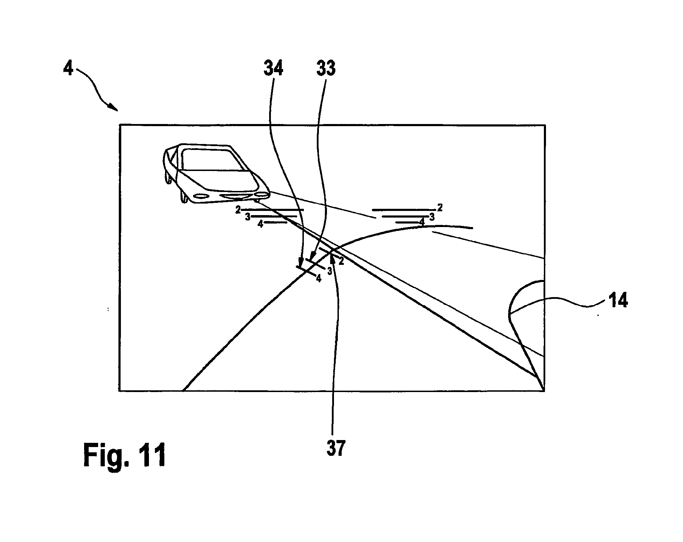

In Figuren 9 bis 11 ist ein viertes Ausführungsbeispiel dargestellt, bei dem in der Anzeige auf einem Bildschirm 4 eine Darstellung von minimalen Fahrkreisen gegenüber den vorhergehenden Ausführungsbeispielen weggelassen ist. Stattdessen ist an jeder von zwei Fahrschlauchbegrenzungen 13, 14 eine einzelne Zweitentscheidungsmarke 30, 37 für den Umlenkpunkt beim Zwei-Zug-Einparken ergänzend zu Zweitentscheidungsmarken 31 bis 34 für die jeweiligen Umlenkpunkte für den zweiten Lenkeinschlag beim Drei- und Vier-Zug-Einparken angezeigt. Die Situation in Ausgangsstellung, das heißt vor dem ersten Zug, zeigt Figur 9, die Anzeige auf dem Bildschirm 4 am Umlenkpunkt beim zweizügigen Einparken ist in Figur 10 dargestellt. Zusätzlich lassen sich - wie auch bei allen vorgenannten Ausführungsbeispielen - nicht nur an den Entscheidungsmarken sondern auch an den Zweitentscheidungsmarken 30 bis 34, 37 Hinweise auf die zugehörige Parkstrategie angeben, wie zum Beispiel die (Mindest-)Anzahl der zugehörigen Züge. Dieses ist in Figur 11 dargestellt, wobei die hier nicht benötigten Zweitentscheidungsmarken auf der parklückenseitig inneren Fahrschlauchbegrenzung 14 ausgeblendet sind.

## Patentansprüche

1. Vorrichtung zur Unterstützung eines Einparkvorgangs eines Fahrzeugs mit einer Rückfahrkamera zur Aufnahme eines den Raum hinter dem Fahrzeug wiedergebenden Rückfahrbildes und mit einem Bildschirm zur Anzeige des Rückfahrbildes, wobei auf dem Bildschirm in Überlagerung des Rückfahrbildes eine mit zumindest einem Teil einer Begrenzung einer Parklücke in Übereinstimmung zu bringende Entscheidungsmarke für einen ersten Lenkeinschlag des Einparkvorgangs darstellbar ist, **dadurch gekennzeichnet, dass** auf dem Bildschirm (4) gleichzeitig mehrere Entscheidungsmarken (18 - 23) für den ersten Lenkeinschlag darstellbar sind, die jeweils mit einer unterschiedlichen Anzahl von für den Einparkvorgang mindestens auszuführenden Zügen korrespondieren.

2. Vorrichtung nach Anspruch 1, **dadurch gekennzeichnet, dass** die Entscheidungsmarken (18 - 23) mit der dem Fahrzeug (1) abgewandten hinteren Begrenzung (9) der Parklücke (5) bei einem seitlichen Einparkvorgang in Übereinstimmung bringbare horizontale Linien (24 - 29) sind.

3. Vorrichtung nach Anspruch 1 oder 2, **dadurch gekennzeichnet, dass** auf dem Bildschirm (4) in Überlagerung des Rückfahrbildes (12) einen Fahrschlauch des Fahrzeugs (1) in Abhängigkeit vom Lenkeinschlag angebende Fahrschlauchbegrenzungen (13, 14) darstellbar sind.

4. Vorrichtung nach einem der vorhergehenden Ansprüche, **dadurch gekennzeichnet, dass** auf dem Bildschirm (4) in Überlagerung des Rückfahrbildes (12) zumindest ein Abschnitt (15, 16) eines den minimalen Fahrkreis des Fahrzeugs (1) angebenden Bogens darstellbar ist.

5. Vorrichtung nach einem der vorhergehenden Ansprüche, **dadurch gekennzeichnet, dass** auf dem Bildschirm (4) in Überlagerung des Rückfahrbildes (12) eine mit zumindest einem Teil einer Begrenzung (10) der Parklücke (5) in Übereinstimmung zu bringende Zweitentscheidungsmarke (30) für einen zweiten Lenkeinschlag darstellbar ist

6. Vorrichtung nach Anspruch 5, **dadurch gekennzeichnet, dass** auf dem Bildschirm (4) mehrere Zweitentscheidungsmarken (30 - 34) für den zweiten Lenkeinschlag darstellbar sind, die jeweils mit einer unterschiedlichen Anzahl von für den Einparkvorgang mindestens auszuführenden Zügen korrespondieren.

7. Vorrichtung nach Anspruch 5 oder 6, **dadurch gekennzeichnet, dass** mindestens eine der Zweitentscheidungsmarken (31 - 34) ein mit einer inneren Begrenzung (10) der Parklücke (5) bei einem seitlichen Einparkvorgang in Übereinstimmung bringbares Kreissegment oder ein an das Kreissegment angenäherter_Geradenabschnitt ist.

8. Vorrichtung nach einem der Ansprüche 5 bis 7, **dadurch gekennzeichnet, dass** mindestens eine der Zweitentscheidungsmarken (31 - 34) ein die Darstellung des minimalen Fahrkreises schneidendes Kreissegment oder ein an das Kreissegment angenäherter Geradenabschnitt ist.

9. Vorrichtung nach einem der Ansprüche 5 bis 8, **dadurch gekennzeichnet, dass** zumindest eine der Zweitentscheidungsmarken (31- 34) ein die Darstellung einer Fahrschlauchbegrenzung (13, 14) schneidendes Kreissegment oder ein an das Kreissegment angenäherter Geradenabschnitt ist.

10. Vorrichtung nach einem der vorhergehenden Ansprüche, **dadurch gekennzeichnet, dass** die Entscheidungsmarken (18 - 23) und/oder die Zweitentscheidungsmarken (30 - 34, 37) mit Ziffern entsprechend der jeweiligen Anzahl der für den Einparkvorgang insgesamt mindestens auszuführenden Züge versehen sind.

11. Vorrichtung nach einem der vorhergehenden Ansprüche, **dadurch gekennzeichnet, dass** der Bildschirm (4) ein Farbbildschirm ist und dass die Entscheidungsmarken (18 - 23) und/oder die Zweitentscheidungsmarken (30 - 34, 37) und/oder die Fahrschlauchbegrenzungen (13,14) und/oder der zumindest eine Abschnitt (15,16) zur Angabe des minimalen Fahrkreises in jeweils unterschiedlichen Farben darstellbar sind.

12. Vorrichtung nach einem der vorhergehenden Ansprüche, **dadurch gekennzeichnet, dass** die Entscheidungsmarken (18 - 23) und/oder die Zweitentscheidungsmarken (30 - 34, 37) in Abhängigkeit von dem Lenkeinschlag darstellbar sind.

13. Vorrichtung nach einem der vorhergehenden Ansprüche, **dadurch gekennzeichnet, dass** zumindest eine der Entscheidungsmarken (18 - 23) und/oder zumindest eine der Zweitentscheidungsmarken (30 - 34, 37) ausblendbar ist.

## Claims

1. A device for assisting with a parking process of a vehicle having a reversing camera for recording a reversing image which represents the space behind the vehicle and having a screen for displaying the reversing image, wherein a decision marker for a first steering lock of the parking operation which is to be made to coincide with at least part of a boundary of a parking space can be displayed on the screen superimposed on the reversing image, **characterized in that** a plurality of decision markers (18-23) for the first steering lock, which each correspond to a different number of movements which have to at least be carried out for the parking operation, can be displayed simultaneously on the screen (4).

2. Device according to Claim 1, **characterized in that** the decision markers (18-23) are horizontal lines (24-29) which can be made to coincide with the rear boundary (9) of the parking space (5) facing away from the vehicle (1) during a lateral parking operation.

3. Device according to Claim 1 or 2, **characterized in that** driving tube boundaries (13, 14) which specify a driving tube of the vehicle (1) as a function of the steering lock can be displayed on the screen (4) superimposed on the reversing image (12).

4. Device according to one of the preceding claims, **characterized in that** at least one section (15, 16) of an arc which specifies the minimum turning circle of the vehicle (1) can be displayed on the screen (4) superimposed on the reversing image (12).

5. Device according to one of the preceding claims, **characterized in that** a second decision marker (30) for a second steering lock which is to be made to coincide with at least part of a boundary (10) of the parking space (5) can be displayed on the screen (4) superimposed on the reversing image (12).

6. Device according to Claim 5, **characterized in that** a plurality of second decision markers (30-34) for the second steering lock, which each correspond to a different number of movements which have to at least be carried out for the parking operation, can be displayed on the screen (4).

7. Device according to Claim 5 or 6, **characterized in that** at least one of the second decision markers (31-34) is a circular segment which can be made to coincide with an inner boundary (10) of the parking space (5) during a lateral parking operation or a linear section which has been approximated to the circular segment.

8. Device according to one of Claims 5 to 7, **characterized in that** at least one of the second decision markers (31-34) is a circular segment which intersects the display of the minimum turning circle or a linear section which has been approximated to the circular segment.

9. Device according to one of Claims 5 to 8, **characterized in that** at least one of the second decision markers (31-34) is a circular segment which intersects the display of a driving tube boundary (13, 14) or a linear section which has been approximated to the circular segment.

10. Device according to one of the preceding claims, **characterized in that** the decision markers (18-23) and/or the second decision markers (30-34, 37) are provided with numerals corresponding to the respective number of total movements which have to at least be carried out for the parking operation.

11. Device according to one of the preceding claims, **characterized in that** the screen (4) is a colour screen, and **in that** the decision markers (18-23) and/or the second decision markers (30-34, 37) and/or the driving tube boundaries (13, 14) and/or the at least one section (15, 16) for specifying the minimum turning circle can be displayed in respective different colours.

12. Device according to one of the preceding claims, **characterized in that** the decision markers (18-23) and/or the second decision markers (30-34, 37) can be displayed as a function of the steering lock.

13. Device according to one of the preceding claims, **characterized in that** at least one of the decision markers (18-23) and/or at least one of the second decision markers (30-34, 37) can be removed from the display.

## Revendications

1. Dispositif d'assistance pour une manoeuvre de stationnement d'un véhicule équipé d'une caméra de recul pour prendre l'image en recul de l'espace derrière le véhicule ainsi qu'un écran pour afficher l'image de recul,
l'écran présentant par superposition de l'image de recul, un repère de décision qu'il faut mettre en concordance avec au moins une partie d'une limite de l'emplacement de stationnement pour un premier braquage de roue pour la manoeuvre de stationnement,
**caractérisé en ce que**
l'écran (4) présente simultanément plusieurs repères de décision (18-23) pour le premier braquage, ces repères correspondant respectivement à un nombre différent minimum de manoeuvres à exécuter pour le stationnement.

2. Dispositif selon la revendication 1,
**caractérisé en ce que**
les repères de décision (18-23) sont des lignes horizontales (24, 29) qu'il faut mettre en concordance avec la limite arrière (9) de l'emplacement de stationnement (5) à l'opposé du véhicule (1), pour une manoeuvre de stationnement par le côté, en concordance avec des lignes horizontales. (24-29).

3. Dispositif selon l'une quelconque des revendications 1 ou 2,
**caractérisé en ce que**
l'écran (4) présente en superposition l'image de recul (12), un couloir de conduite du véhicule (1) en fonction des limitations de tracé (13, 14) dépendant du braquage.

4. Dispositif selon l'une quelconque des revendications précédentes,
**caractérisé en ce que**
sur l'écran (4) en superposition de l'image de recul (12) on représente au moins un segment (15, 16) d'au moins un cercle de braquage minimum du véhicule (1).

5. Dispositif selon l'une quelconque des revendications précédentes,
**caractérisé en ce que**
sur l'écran image (4), en superposition avec l'image de recul (12), on représente un second repère de décision (30) pour un second braquage de roue, qui doit être mis en concordance avec au moins une partie d'une limitation (10) de l'emplacement de stationnement (5).

6. Dispositif selon la revendication 5,
**caractérisé en ce que**
sur l'écran (4) on représente plusieurs repères de seconde décision (30, 40) pour le second braquage de roue, repères qui correspondent chaque fois à un nombre différent d'opérations à effectuer pour la manoeuvre de stationnement.

7. Dispositif selon l'une quelconque des revendications 5 et 6,
**caractérisé en ce qu'**
au moins l'un des seconds repères de décision (31, 34) à mettre en concordance avec une limitation intérieure (10) de l'emplacement de stationnement (5) pour une manoeuvre de stationnement effectuée par les côtés, doit être en concordance avec un segment de cercle ou un segment de droite se rapprochant du segment de cercle.

8. Dispositif selon l'une quelconque des revendications 5 à 7,
**caractérisé en ce qu'**
au moins l'un des seconds repères de décision (31-34) est un segment de cercle coupant la représentation du cercle de braquage minimum ou un segment de droite se rapprochant du segment de cercle.

9. Dispositif selon l'une quelconque des revendications 5 à 8,
**caractérisé en ce qu'**
au moins l'un des seconds repères de décision (31-34) est un segment de cercle qui coupe la représentation d'une limitation du couloir de conduite (13, 14) ou un segment de droite approché du segment de cercle.

10. Dispositif selon l'une quelconque des revendications précédentes,
**caractérisé en ce que**
les repères de décision (18-23) et/ou les repères de seconde décision (30-34, 37) portent des chiffres correspondant au nombre respectif d'opérations à effectuer au moins globalement, pour la manoeuvre de stationnement.

11. Dispositif selon l'une quelconque des revendications précédentes,
**caractérisé en ce que**
l'écran (4) est un écran en couleur et les repères de décision (18-23) et/ou les repères de décision intermédiaires (30-34, 37) et/ou la limite du couloir de conduite (13, 14) et/ou au moins un segment (15, 16) sont représentés dans des courbes chaque fois différentes pour indiquer le cercle de braquage minimum.

12. Dispositif selon l'une quelconque des revendications précédentes,
**caractérisé en ce que**
les repères de décision (18-23) et/ou les repères de seconde décision (30-34, 37) sont représentés en fonction du braquage.

13. Dispositif selon l'une quelconque des revendications précédentes,
**caractérisé en ce qu'**
on élimine au moins l'un des repères de décision (18-23) et/ou au moins un des seconds repères de décision (30-34, 37).
